Europäisches Patentamt

European Patent Office

Office européen des brevets

(19)

(11) Publication number: **0 246 916 B1**

# EUROPEAN PATENT SPECIFICATION

(12)

(45) Date of publication of patent specification: **24.06.92**  (51) Int. Cl.5: **B64C 21/10**, B63B 1/34

(21) Application number: **87304579.3**

(22) Date of filing: **22.05.87**

(54) **Boundary layer flow control.**

(30) Priority: **22.05.86 GB 8612487**
**19.03.87 GB 8706554**

(43) Date of publication of application:
**25.11.87 Bulletin  87/48**

(45) Publication of the grant of the patent:
**24.06.92 Bulletin  92/26**

(84) Designated Contracting States:
**DE FR GB SE**

(56) References cited:
**EP-A- 0 205 289**
**EP-A- 0 216 384**

**AIAA'83 21st AEROSPACE SCIENCES MEET-
ING, Reno, Nevada, 10th-13th January 1983,
pages 6,18, American Institute of Aeronau-
tics and Astronautics, New York, US; D.M.
BUSHNELL: "Turbulent drag reduction for ex-
ternal flows"**

**MECHANICAL ENGINEERING, vol. 103, no. 3,
March 1981, page 71, New York, US;
"Grooves reduce aircraft drag"**

(73) Proprietor: **ROLLS-ROYCE plc**
**65 Buckingham Gate**
**London, SW1E 6AT(GB)**

(72) Inventor: **Savill, Anthony Mark**
**46 Histon Road**
**Cambridge(GB)**

(74) Representative: **Dargavel, Laurence Peter**
**Rolls-Royce plc Patents Department P.O.
Box 31 Moor Lane**
**Derby DE2 8BJ(GB)**

Rank Xerox (UK) Business Services

**Description**

Description for the following Contracting States : DE, FR, GB

This invention is concerned with the modification of turbulent boundary layer flows over aerodynamic and hydrodynamic surfaces.

There have been many investigations in recent years of the effects that small-geometry surface configurations can have on turbulent boundary layers. Particular attention has been paid to the provision of so-called riblet surfaces in which an array of small longitudinal ribs extend over the turbulent boundary layer region of a surface in the direction of fluid flow over the surface, and experimental results indicate that net or surface drag reductions of up to about 7% can be achieved.

In a paper "Drag Characteristics of V-Groove and Transverse Curvature Riblets" (presented by M.J. Walsh at the Symposium on Viscous Drag Reduction, Dallas, Texas, November 7-8, 1979) reference is made to an early investigation (1966) by Liu, Kline, and Johnston in which drag reductions of 3-4% were obtained by reducing the turbulent bursting rate (i.e. the rate of break-up of the low speed longitudinal vortices or "streaks" that are characteristically formed in a turbulent boundary layer flow close to a wall) by employing rectangular fins. Walsh's paper reports the investigation of a number of alternative rib profiles and states that he was able to obtain a maximum drag reduction of 7% using V-groove riblets, this representing substantially the greatest reduction of skin friction drag that experimenters have been able to obtain up to the present.

The drag reduction may be associated with the ability of the riblets to limit random spanwise movements of the streaks, as has been suggested by a number of sources, e.g. R.E. Falco (AIAA-83-0377, AIAA 21st Aerospace Sciences Meeting, January 10-13 1983, Reno, Nevada). Johansen and Smith (AIAA-85-0547, AIAA-Shear Flow Control Conference, March 12-14, 1985, Boulder, Colorado) have shown that cylindrical riblets of a smaller height than the V-groove riblets with which Walsh obtained his optimum results, have the effect of anchoring and/or creating sites of low-speed streaks in a limited region above the wall surface, but their experiments also showed drag increases of 3% to 8%. More recently, S.P. Wilkinson (abstract of paper read at "Drag Reduction and Boundary Layer Control Symposium", 22-25 October 1985, at the National Academy of Sciences, Washington D.C.) has attempted to follow Johansen and Smith by using riblets to anchor or create low-speed streaks by the use of blade riblets and then use V-groove riblets between the streak anchors to control bursting, but it is not yet reported whether a net drag reduction has been achieved thereby.

The results reported from these and other previous investigations all show the effect of riblets is rather limited, and that has led to the search for alternative solutions.

The mechanisms by which the riblets on such surfaces work is not yet fully understood. If, as has been suggested, they bring a turbulent boundary layer flow closer to laminar flow conditions their efficiency is low, bearing in mind that in equivalent turbulent and laminar flow regions the skin friction drag with laminar flow is some 80% less than that with turbulent flow. What may be significant is the fact that different researchers have published conflicting data about the variation of nett reduction of skin friction with rib length.

In EP-A-0205289, a wide variety of possible different riblet configurations are disclosed, including the concept that the height and/or width of a given peak or valley may change as the peak or valley progresses from one end of a surface to the other. However, the benefits to be obtained from such constructions are not disclosed and no guidance is given as to the rates of increase in dimensions per unit length of riblet.

According to the present invention, there is provided an aerodynamic or hydrodynamic wall surface which is provided with a series of elongate projections extending in the direction of fluid flow relative to the surface and effective to reduce drag of a turbulent boundary layer on said surface by inhibiting penetration of turbulence in the boundary layer into the valleys between the projections, said projections increase in height at a rate of between 20 % and 100 % per metre length of distance along the wall surface in the direction of fluid flow.

The projections preferably form a substantially continuous spanwise array, with an increase in the aspect ratio of the projection transverse cross-section to give the increased height. It is also preferred to form the projections with sharp-peaked profiles.

The invention is based upon the concept that the projections or riblets function to inhibit turbulent motions in the boundary layer from penetrating to all parts of the wall surface, in particular deep into the grooves, resulting in a displacement of the turbulent motion away from the wall. The invention aims to extend those effects by increasing the heights of the projections without disrupting the flow pattern. A secondary benefit arises because the modification of flow produced tends to be self-limiting due to the fact that a virtual wall position a created at a substantial part of the initial height of the riblets. An increase of the riblet height can therefore counter the degradation of their performance that would otherwise result from this phenomenon.

A further benefit is obtainable because there is some degree of progressive reduction of wall shear stress with streamwise development length (i.e. distance along the wall surface in the direction of the stream) that may be significant in the transition region and the early part of the turbulent boundary layer. The increase of height of the projections may be scaled up to counter this effect, with the result that the height increase more than compensates for the degradation of performance that the change of virtual wall position produced on fixed height projections.

It is preferable to have a continuous increase of height, the projections then appearing as "ramplets". A simpler arrangement, although possibly less efficient, would be to provide succeeding bands of progressively higher projections so that the projections of each band have a uniform height. The bands are assembled together to present to the stream a series of projections with progressively stepped increasing heights. The projections may also be given increases of pitch along their length.

In a preferred configuration according to the invention, the projections have side faces that are inclined at an angle that varies over the height of the projections, each said side face having an intermediate region at a lesser steepness than the adjacent regions above and below said region and forming the lower part of a concave profile peak on the associated projection.

For best effect the transition to the concave-sided peaks should be positioned at or close to the virtual wall height established by the projections. The region below the transition preferably has substantially planar faces so as to form a series of steep-sided V-grooves between the projections in their lowest reaches. These can act in the manner already described to displace the turbulent motion away from the wall surface. The longitudinal vortices displaced above the virtual wall surface are then controlled by the concave peaks projecting into this region which, by virtue of their different profile, can act more strongly on the vortices.

The transition to the concave profile may be substantially sharp-edged, but it is also possible to have a radiussed or chamfered transition. The concave faces are preferably continuously curved to a relatively sharp-edged tip but it is also possible to build them up from a group of straight and/or curved sections and for convenience the tip itself may be flattened or radiussed.

By way of example, reference will now be made to the accompanying drawings, in which:

Fig. 1 illustrates in schematic form a pair of triangular cross-section projections or riblets of an array of such riblets on a wall surface formed in accordance with the invention, and

Figs. 2 to 5 illustrate a number of modifications that can be applied individually or in combination to the configuration in Fig. 1.

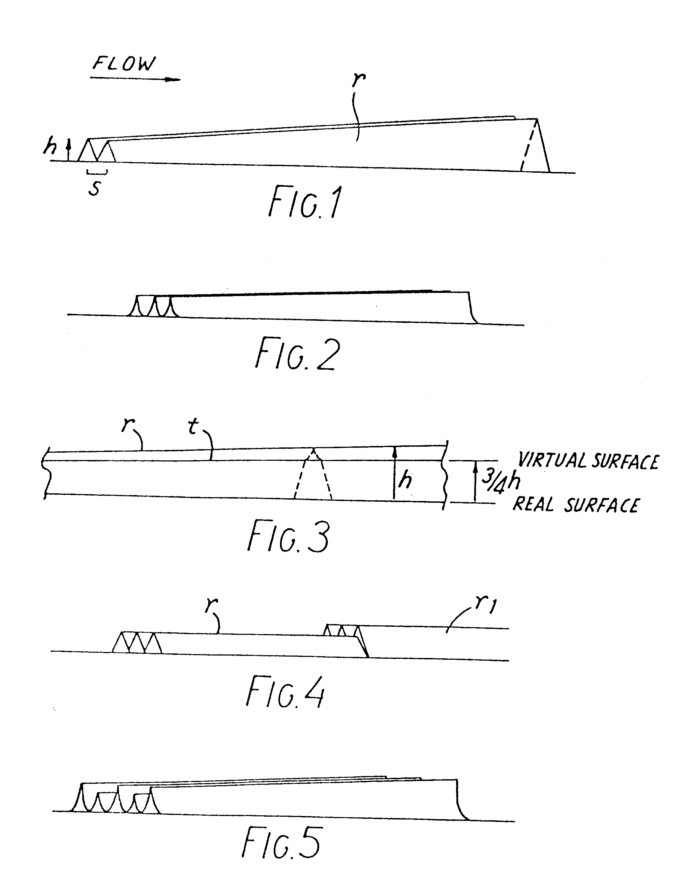

Referring firstly to Fig. 1, the wall surface has a continuous series of riblets r running in the stream direction over the surface, starting in the transition region, or at least from the onset of the turbulent boundary layer region, and preferably over the entire turbulent boundary layer area of the wall. It is not essential that the riblets be aligned precisely with the fluid stream and deviations of up to 10°-15° can be tolerated. It may improve performance if, at their leading edges, the riblets are faired into the wall surface to avoid drag increments associated with the flow meeting a bluff leading face. The riblets have a constant base width in this example but their height increases continuously along their length to give them an increasingly sharper triangular profile. They can have other profiles, such as the sharp peaks (apex included angle preferably not greater than 20˚) with rounded valleys shown in Fig. 2. Furthermore, while Fig. 1 shows the riblets with base widths equal to their heights at their upstream end it may be preferred to increase the base widths to about twice the upstream end heights of the respective riblets; this is particularly relevant to cusp-shaped profiles shown in Fig. 2.

Fig. 3 illustrates another form of profile that can be employed for the riblets of the present invention. It is assumed that the riblets establish a virtual wall surface at some $\frac{3}{4}$ h. Below that level there is a V-groove profile, whereas there is a change of slope at that level, from which the riblets extend with sharp-peaked concave profiles. The differently profiled regions are adapted to different functions. The regions below the virtual wall surface form the relatively deep V-grooves that are better able to inhibit penetration of turbulent eddy motions, while the concave faces above the virtual wall surface can more effectively promote very small scale longitudinal vortices which drain energy from the larger streaks in the turbulent boundary layer flow. To perform their functions effectively the concave faces should form relatively sharp-edged peaks. Since h is itself increased with distance along the direction of fluid flow, the point of transition of the profile also rises along the length of the riblet.

It will be appreciated that the effects described can be achieved, at least in substance, with modified forms of the inclined side faces shown. In particular, it may be desirable for practical reasons to blunt the points of inflection or the peaks of the riblet faces, while these faces may comprise straight and/or curved portions both below and above the virtual wall surface without unduly changing the general character of the profile required for the functions described.

For ease of manufacture it may be preferred to achieve the increase of riblet height in a series of steps, as shown by the riblets $r_1$ succeeding the riblets r in Fig. 4, since uniform height riblets can be produced relatively easily by machining or extrusion, and if required at each step the leading edges of the riblets can be faired. The pitch of the riblets can similarly be progressively increased at each stage, as has already been mentioned above, not necessarily simultaneously with an increase of height.

In all cases, for reducing wetted area it may also be possible to have short spanwise-extending gaps (less than the boundary layer thickness $\delta$) in the streamwise direction between riblet areas (themselves greater than $2\,\delta$ in streamwise length) without sacrificing the advantages offered by the riblets.

The preferred sizes and dimensional relationships of a uniform series of the riblets may be expressed in the non-dimensional form of so-called "law of the wall" variables, in which actual distance values are multiplied by a "wall unit" scalar quantity defined as:

$$\sqrt{\tau/\ell}\,/\,\nu$$

where

$\tau$     is the wall shear stress,

$\ell$     is the fluid density, and

$\nu$     is the fluid kinematic viscosity.

In the examples of Figs. 1 to 5 the riblets r have at their leading ends a non-dimensionalised height $h^+$ in the range: $2 \leq h^+ \leq 20$, preferably between 5 and 15 wall units. Their spanwise pitch or distance $s^+$ between adjacent apices is in the range: $6 \leq s^+ \leq 40$, preferably between 10 and 20 wall units. Variations within the ranges specified may be made independently for either parameter.

The riblet dimensions referred to above appear appropriate from the results of experiments carried out at relatively low free-stream velocities (U) and for Mach numbers (M) below about 0.3. However, it has been found that modification of the dimensions, in particular the riblet heights, is desirable for higher velocities and Mach Nos. It would appear that the streamwise length of the projections has a significant influence on the optimum dimensions especially in regions greater than about 0.4M. Wind tunnel tests with uniform arrays of single-height V-groove riblets having a streamwise length of about 1 metre exemplify the change of dimensions in terms of wall units that is required to give optimum results at higher velocities. The following table, giving the riblet dimensions at the leading edge of the riblets, puts the data from these tests (3), (4), (5) in context with previous low speed results (1), (2):

Riblet height/span

$h^+, s^+$ $\quad\quad R_{eL}$

Wall units

| | $h^+, s^+$ | $R_{eL}$ |
|---|---|---|
| (1) | 13 | $0.8 \times 10^6$ |
| (2) | 15 | $3 \times 10^6$ |
| (3) | 17 | $5 \times 10^6$ |
| (4) | 20 | $10 \times 10^6$ |
| (5) | 25 | $15 \times 10^6$ |

$R_{eL}$ being the length Reynolds No. $= \dfrac{UL}{\nu}$ , L being the length of the riblets.

These results indicate that for optimum effect, at the leading edge of the riblets an increase of height in wall units of some 50% is required for a ten-fold increase of $R_{eL}$ relative to the low speed riblet height at $R_{eL}$ = $1 \times 10^6$. The increase of projection height to mitigate the self-limiting effect of the projections should apparently be amplified therefore to compensate for length Reynolds No. effects. However, a combined scaling value for both effects would not normally be appropriate because the velocity related nature of the length Reynolds No. effects involves a further variable.

The factors that determine the optimum are many and complex. The form of the underlying body, which may have streamwise and/or spanwise curvatures or discontinuities, and the possibility of non-uniform U values over the extent of a riblet array introduce further influences and an empirical evaluation of the optimum riblet dimensions may be necessary. For general purposes however, if the compensation for $R_{eL}$ is obtained by increasing the leading edge height of the riblets, and possibly also their spacing, it is suggested that in relation to the lower speed values given in the discussion of the illustrated examples above, an appropriate scaling factor of the leading edge dimensions of the riblets in wall units in relation to $R_{eL}$ ($h^+ : R_{eL}$) should be in the range 1:20 to 1:6.

The optimum rate of increase of riblet height excluding length Reynolds No. effects will comprise at least a 5% rate per metre for the self-limiting effect and a 15% rate per metre for the effect of skin friction variation, giving a combined rate of 20% per metre. With compensation for length Reynolds No. effects using a progressive increase of the riblet heights along their length, and allowing for the fact that skin friction is a function of velocity, the total optimum rate as a continuous increase of height might in practice be up to 50% per metre or even higher, up to about 100% per metre These latter figures are attainable because of the ability of the progressively increasing height riblets to force the turbulent boundary layer flow further away from the basic wall surface.

The extent to which beneficial effects may be obtained will depend in practice on the wall surfaces to which the riblets are applied and the limits at which flow separation occurs over these surfaces. In particular instances it may be possible to continue the increase of height of the riblets up to a factor of 5 or more, but even in less favourable conditions an increase by a factor of at least 2 should be possible.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. the blading, both rotating and stationary, of turbo-machines, and for the internal surfaces of pipes and conduits. It will be understood that the invention includes the possibilities of forming the surface projections integrally with the bodies concerned and also of providing surface elements, e.g. as sheets or tapes, having the projections, for application to bodies to provide the required surface configurations thereon.

Further improvement of the boundary layer flow over the wall surface can be obtained if the procedure of progressively increasing the heights of the riblets here disclosed is employed in arrays composed of spanwise repeated patterns of different height riblets as exemplified in Fig. 5 and described in more detail in our co-pending patent applications EP-A-0246914 and EP-A-0246915 filed simultaneously herewith. Such a procedure can not only give the benefits of these different configurations but can also enhance the efficiencies of these riblet patterns by extending their effectiveness over greater wall lengths streamwise.

A further advantageous application of the increasing height riblets is in conjunction with large eddy break-up devices (LEBU's) where they can prolong the effective stream length in which the drag reduction effects of the LEBU's are experienced.

### Description for the following Contracting State : SE

This invention is concerned with the modification of turbulent boundary layer flows over aerodynamic and hydrodynamic surfaces.

There have been many investigations in recent years of the effects that small-geometry surface configurations can have on turbulent boundary layers. Particular attention has been paid to the provision of so-called riblet surfaces in which an array of small longitudinal ribs extend over the turbulent boundary layer region of a surface in the direction of fluid flow over the surface, and experimental results indicate that net or surface drag reductions of up to about 7% can be achieved.

In a paper "Drag Characteristics of V-Groove and Transverse Curvature Riblets" (presented by M.J. Walsh at the Symposium on Viscous Drag Reduction, Dallas, Texas, November 7-8, 1979) reference is made to an early investigation (1966) by Liu, Kline, and Johnston in which drag reductions of 3-4% were obtained by reducing the turbulent bursting rate (i.e. the rate of break-up of the low speed longitudinal vortices or "streaks" that are characteristically formed in a turbulent boundary layer flow close to a wall) by employing rectangular fins. Walsh's paper reports the investigation of a number of alternative rib profiles and states that he was able to obtain a maximum drag reduction of 7% using V-groove riblets, this representing substantially the greatest reduction of skin friction drag that experimenters have been able to obtain up to the present.

The drag reduction may be associated with the ability of the riblets to limit random spanwise movements of the streaks, as has been suggested by a number of sources, e.g. R.E. Falco (AIAA-83-0377, AIAA 21st Aerospace Sciences Meeting, January 10-13 1983, Reno, Nevada). Johansen and Smith (AIAA-85-0547, AIAA-Shear Flow Control Conference, March 12-14, 1985, Boulder, Colorado) have shown that cylindrical riblets of a smaller height than the V-groove riblets with which Walsh obtained his optimum results, have the effect of anchoring and/or creating sites of low-speed streaks in a limited region above the wall surface, but their experiments also showed drag increases of 3% to 8%. More recently, S.P. Wilkinson (abstract of paper read at "Drag Reduction and Boundary Layer Control Symposium", 22-25 October 1985, at the National Academy of Sciences, Washington D.C.) has attempted to follow Johansen and Smith by using riblets to anchor or create low-speed streaks by the use of blade riblets and then use V-groove riblets between the streak anchors to control bursting, but it is not yet reported whether a net drag reduction has been achieved thereby.

The results reported from these and other previous investigations all show the effect of riblets is rather limited, and that has led to the search for alternative solutions.

The mechanisms by which the riblets on such surfaces work is not yet fully understood. If, as has been suggested, they bring a turbulent boundary layer flow closer to laminar flow conditions their efficiency is low, bearing in mind that in equivalent turbulent and laminar flow regions the skin friction drag with laminar flow is some 80% less than that with turbulent flow. What may be significant is the fact that different researchers have published conflicting data about the variation of nett reduction of skin friction with rib length.

According to the present invention, there is provided an aerodynamic or hydrodynamic wall surface which is provided with a series of elongate projections extending in the direction of fluid flow relative to the surface and effective to reduce drag of a turbulent boundary layer on said surface by inhibiting penetration of turbulence in the boundary layer into the valleys between the projections, the projections increasing in height with distance along the wall surface in the direction of fluid flow.

The projections preferably form a substantially continuous spanwise array, with an increase in the aspect ratio of the projection transverse cross-section to give the increased height. It is also preferred to form the projections with sharp-peaked profiles.

The invention is based upon the concept that the projections or riblets function to inhibit turbulent motions in the boundary layer from penetrating to all parts of the wall surface, in particular deep into the grooves, resulting in a displacement of the turbulent motion away from the wall. The invention aims to extend those effects by increasing the heights of the projections without disrupting the flow pattern. A secondary benefit arises because the modification of flow produced tends to be self-limiting due to the fact that a virtue wall position is created at a substantial part of the initial height of the riblets. An increase of the riblet height can therefore counter the degradation of their performance that would otherwise result from this phenomenon.

A further benefit is obtainable because there is some degree of progressive reduction of wall shear stress with streamwise development length (i.e. distance along the wall surface in the direction of the stream) that may be significant in the transition region and the early part of the turbulent boundary layer. The increase of height of the projections may be scaled up to counter this effect, with the result that the height increase more than compensates for the degradation of performance that the change of virtual wall position produced on fixed height projections.

It is preferable to have a continuous increase of height, the projections then appearing as "ramplets". A simpler arrangement, although possibly less efficient, would be to provide succeeding bands of progressively higher projections so that the projections of each band have a uniform height. The bands are assembled together to present to the stream a series of projections with progressively stepped increasing heights. The projections may also be given increases of pitch along their length.

In a preferred configuration according to the invention, the projections have side faces that are inclined at an angle that varies over the height of the projections, each said side face having an intermediate region at a lesser steepness than the adjacent regions above and below said region and forming the lower part of a concave profile peak on the associated projection.

For best effect the transition to the concave-sided peaks should be positioned at or close to the virtual wall height established by the projections. The region below the transition preferably has substantially planar faces so as to form a series of steep-sided V-grooves between the projections in their lowest reaches. These can act in the manner already described to displace the turbulent motion away from the wall surface. The longitudinal vortices displaced above the virtual wall surface are then controlled by the concave peaks projecting into this region which, by virtue of their different profile, can act more strongly on the vortices.

The transition to the concave profile may be substantially sharp-edged, but it is also possible to have a radiussed or chamfered transition. The concave faces are preferably continuously curved to a relatively sharp-edged tip but it is also possible to build them up from a group of straight and/or curved sections and for convenience the tip itself may be flattened or radiussed.

By way of example, reference will now be made to the accompanying drawings, in which:

Fig. 1 illustrates in schematic form a pair of triangular cross-section projections or riblets of an array of such riblets on a wall surface formed in accordance with the invention, and

Figs. 2 to 5 illustrate a number of modifications that can be applied individually or in combination to the configuration in Fig. 1.

Referring firstly to Fig. 1, the wall surface has a continuous series of riblets r running in the stream direction over the surface, starting in the transition region, or at least from the onset of the turbulent boundary layer region, and preferably over the entire turbulent boundary layer area of the wall. It is not essential that the riblets be aligned precisely with the fluid stream and deviations of up to 10°-15° can be tolerated. It may improve performance if, at their leading edges, the riblets are faired into the wall surface to avoid drag increments associated with the flow meeting a bluff leading face. The riblets have a constant base width in this example but their height increases continuously along their length to give them an increasingly sharper triangular profile. They can have other profiles, such as the sharp peaks (apex included angle preferably not greater than 20°) with rounded valleys shown in Fig. 2. Furthermore, while Fig. 1 shows the riblets with base widths equal to their heights at their upstream end it may be preferred to increase the base widths to about twice the upstream end heights of the respective riblets; this is particularly relevant to cusp-shaped profiles shown in Fig. 2.

Fig. 3 illustrates another form of profile that can be employed for the riblets of the present invention. It is assumed that the riblets establish a virtual wall surface at some $\frac{3}{4}$ h. Below that level there is a V-groove profile, whereas there is a change of slope at that level, from which the riblets extend with sharp-peaked concave profiles. The differently profiled regions are adapted to different functions. The regions below the virtual wall surface form the relatively deep V-grooves that are better able to inhibit penetration of turbulent eddy motions, while the concave faces above the virtual wall surface can more effectively promote very small scale longitudinal vortices which drain energy from the larger streaks in the turbulent boundary layer flow. To perform their functions effectively the concave faces should form relatively sharp-edged peaks.

Since h is itself increased with distance along the direction of fluid flow, the point of transition of the profile also rises along the length of the riblet.

It will be appreciated that the effects described can be achieved, at least in substance, with modified forms of the inclined side faces shown. In particular, it may be desirable for practical reasons to blunt the points of inflection or the peaks of the riblet faces, while these faces may comprise straight and/or curved portions both below and above the virtual wall surface without unduly changing the general character of the profile required for the functions described.

For ease of manufacture it may be preferred to achieve the increase of riblet height in a series of steps, as shown by the riblets $r_1$ succeeding the riblets r in Fig. 4, since uniform height riblets can be produced relatively easily by machining or extrusion, and if required at each step the leading edges of the riblets can be faired. The pitch of the riblets can similarly be progressively increased at each stage, as has already been mentioned above, not necessarily simultaneously with an increase of height.

In all cases, for reducing wetted area it may also be possible to have short spanwise-extending gaps (less than the boundary layer thickness $\delta$) in the streamwise direction between riblet areas (themselves greater than 2 $\delta$ in streamwise length) without sacrificing the advantages offered by the riblets.

The preferred sizes and dimensional relationships of a uniform series of the riblets may be expressed in the non-dimensional form of so-called "law of the wall" variables, in which actual distance values are multiplied by a "wall unit" scalar quantity defined as:

$$\sqrt{\frac{\tau}{\ell}} \Big/ \nu$$

where

$\tau$     is the wall shear stress,

$\ell$     is the fluid density, and

$\nu$     is the fluid kinematic viscosity.

In the examples of Figs. 1 to 5 the riblets r have at their leading ends a non-dimensionalised height $h^+$ in the range: $2 \leq h^+ \leq 20$, preferably between 5 and 15 wall units. Their spanwise pitch or distance $s^+$ between adjacent apices is in the range: $6 \leq s^+ \leq 40$, preferably between 10 and 20 wall units. Variations within the ranges specified may be made independently for either parameter.

The riblet dimensions referred to above appear appropriate from the results of experiments carried out at relatively low free-stream velocities (U) and for Mach numbers (M) below about 0.3. However, it has been found that modification of the dimensions, in particular the riblet heights, is desirable for higher velocities and Mach Nos. It would appear that the streamwise length of the projections has a significant influence on the optimum dimensions especially in regions greater than about 0.4M. Wind tunnel tests with uniform arrays of single-height V-groove riblets having a streamwise length of about 1 metre exemplify the change of dimensions in terms of wall units that is required to give optimum results at higher velocities. The following table, giving the riblet dimensions at the leading edge of the riblets, puts the data from these tests (3), (4), (5) in context with previous low speed results (1), (2):

Riblet height/span

$$h^+, s^+ \qquad R_{eL}$$

Wall units

| | | | |
|---|---|---|---|
| (1) | 13 | $0.8 \times 10^6$ | |
| (2) | 15 | $3 \times 10^6$ | |
| (3) | 17 | $5 \times 10^6$ | |
| (4) | 20 | $10 \times 10^6$ | |
| (5) | 25 | $15 \times 10^6$ | |

$R_{eL}$ being the length Reynolds No. $= \dfrac{UL}{\nu}$, L being the length of the riblets.

These results indicate that for optimum effect, at the leading edge of the riblets an increase of height in wall units of some 50% is required for a ten-fold increase of $R_{eL}$ relative to the low speed riblet height at $R_{eL}$ = $1 \times 10^6$. The increase of projection height to mitigate the self-limiting effect of the projections should apparently be amplified therefore to compensate for length Reynolds No. effects. However, a combined scaling value for both effects would not normally be appropriate because the velocity related nature of the length Reynolds No. effects involves a further variable.

The factors that determine the optimum are many and complex. The form of the underlying body, which may have streamwise and/or spanwise curvatures or discontinuities, and the possibility of non-uniform U values over the extent of a riblet array introduce further influences and an empirical evaluation of the optimum riblet dimensions may be necessary. For general purposes however, if the compensation for $R_{eL}$ is obtained by increasing the leading edge height of the riblets, and possibly also their spacing, it is suggested that in relation to the lower speed values given in the discussion of the illustrated examples above, an appropriate scaling factor of the leading edge dimensions of the riblets in wall units in relation to $R_{eL}$ ($h^+$ : $R_{eL}$) should be in the range 1:20 to 1:6.

The optimum rate of increase of riblet height excluding length Reynolds No. effects will comprise at least a 5% rate per metre for the self-limiting effect and a 15% rate per metre for the effect of skin friction variation, giving a combined rate of 20% per metre. With compensation for length Reynolds No. effects using a progressive increase of the riblet heights along their length, and allowing for the fact that skin friction is a function of velocity, the total optimum rate as a continuous increase of height might in practice be up to 50% per metre or even higher, up to about 100% per metre These latter figures are attainable because of the ability of the progressively increasing height riblets to force the turbulent boundary layer flow further away from the basic wall surface.

The extent to which beneficial effects may be obtained will depend in practice on the wall surfaces to which the riblets are applied and the limits at which flow separation occurs over these surfaces. In particular instances it may be possible to continue the increase of height of the riblets up to a factor of 5 or more, but even in less favourable conditions an increase by a factor of at least 2 should be possible.

The invention is generally applicable to the wall surfaces of bodies in which a reduction of skin friction is sought. It may thus provide a means of reducing drag on the external surfaces of vehicles, including aircraft, land vehicles and watercraft. It can also be used in machines, e.g. the blading, both rotating and stationary, of turbo-machines, and for the internal surfaces of pipes and conduits. It will be understood that the invention includes the possibilities of forming the surface projections integrally with the bodies concerned and also of providing surface elements, e.g. as sheets or tapes, having the projections, for

EP 0 246 916 B1

application to bodies to provide the required surface configurations thereon.

Further improvement of the boundary layer flow over the wall surface can be obtained if the procedure of progressively increasing the heights of the riblets here disclosed is employed in arrays composed of spanwise repeated patterns of different height riblets as exemplified in Fig. 5 and described in more detail in our co-pending patent applications EP-A-0246914 and EP-A-0246915 filed simultaneously herewith. Such a procedure can not only give the benefits of these different configurations but can also enhance the efficiencies of these riblet patterns by extending their effectiveness over greater wall lengths streamwise.

A further advantageous application of the increasing height riblets is in conjunction with large eddy break-up devices (LEBU's) where they can prolong the effective stream length in which the drag reduction effects of the LEBU's are experienced.

**Claims**
**Claims for the following Contracting States : DE, FR, GB**

1. An aerodynamic or hydrodynamic wall surface which is provided with a series of elongate projections extending in the direction of fluid flow relative to the surface and effective to reduce drag of a turbulent boundary layer on said surface by inhibiting penetration of turbulence in the boundary layer into valleys between the projections, characterized in that said projections increase in height at a rate of between 20% and 100% per metre length of distance along the wall surface in the direction of fluid flow.

2. A surface according to claim 1 wherein said projections increase in pitch with distance along the wall surface in the direction of fluid flow.

3. A surface according to claim 1 or claim 2 wherein said increase of height and for pitch is continuous over at least a part of the length of the projections.

4. A surface according to claim 1 or claim 2 wherein the projections have at least one stepped increase of height and/or pitch.

5. A surface according to any one of the preceding claims wherein the height of the projections increases at a rate of not substantially less than 50% per metre length.

6. A surface according to any one of the preceding claims wherein the projections form a substantially continuous spanwise array.

7. A surface according to any one of the preceding claims wherein the projections extend streamwise at least over the length of the turbulent boundary layer region of the wall surface.

8. A surface according to any one of the preceding claims wherein the projections are sharp-peaked.

9. A surface according to claim 8 wherein the sharp-peaked projections have a V-form profile.

10. A surface according to claim 8 wherein the sharp-peaked projections have a profile which comprises concavely curved or flat-bottomed valleys between the peaks.

11. A surface according to any one of the preceding claims wherein the projections have side faces that are inclined at an angle that varies over the height of the projections, each said side face having an intermediate region at a lesser steepness than the adjacent regions above and below said intermediate region and forming the lower part of a concave profile peak of the associated projection.

12. A surface according to any one of the preceding claims wherein there is a spanwise repeating pattern of projections which have at least two different heights at corresponding stations in the direction of fluid flow.

13. A surface according to any one of the preceding claims wherein the projections extend downstream of at least one large eddy break-up device.

14. A body having an aerodynamic or hydrodynamic wall surface provided with a series of projections

10

according to any one of the preceding claims.

**Claims for the following Contracting State : SE**

1. An aerodynamic or hydrodynamic wall surface which is provided with a series of elongate projections extending in the direction of fluid flow relative to the surface and effective to reduce drag of a turbulent boundary layer on said surface by inhibiting penetration of turbulence in the boundary layer into the valleys between the projections, characterized in that said projections increase in height with distance along the wall surface in the direction of fluid flow.

2. A surface according to claim 1 wherein said projections increase in pitch with distance along the wall surface in the direction of fluid flow.

3. A surface according to claim 1 or claim 2 wherein said increase of height and/or pitch is continuous over at least a part of the length of the projections.

4. A surface according to claim 1 or claim 2 wherein the projections have at least one stepped increase of height and/or pitch

5. A surface according to any one of the preceding claims wherein the height of the projections increases at a rate of between 20% and 100% per metre length.

6. A surface according to claim 5 wherein the height of the projections increases at a rate of not substantially, less than 50% per metre length.

7. A surface according to any one of the preceding claims wherein the projections form a substantially continuous spanwise array.

8. A surface according to any one of the preceding claims wherein the projections extend streamwise at least over the length of the turbulent boundary layer region of the wall surface.

9. A surface according to any one of the preceding claims wherein the projections are sharp-peaked.

10. A surface according to claim 9 wherein the sharp-peaked projections have a V-form profile.

11. A surface according to claim 9 wherein the sharp-peaked projections have a profile which comprises concavely curved or flat-bottomed valleys between the peaks.

12. A surface according to any one of the preceding claims wherein the projections have side faces that are inclined at an angle that varies over the height of the projections, each said side face having an intermediate region at a lesser steepness than the adjacent regions above and below said intermediate region and forming the lower part of a concave profile peak of the associated projection.

13. A surface according to any one of the preceding claims wherein there is a spanwise repeating pattern of projections which have at least two different heights at corresponding stations in the direction of fluid flow.

14. A surface according to any one of the preceding claims wherein the projections extend downstream of at least one large eddy break-up device.

15. A body having an aerodynamic or hydrodynamic wall surface provided with a series of projections according to any one of the preceding claims.

**Revendications**

**Revendications pour l'Etat contractant suivant : DE, FR, GB**

1. Surface de paroi aérodynamique ou hydrodynamique, dotée d'une série de saillies allongées qui s'étendent dans la direction de l'écoulement fluide par rapport à la surface, et ayant pour effet de réduire la traînée de la couche limite turbulente sur ladite surface en empêchant la pénétration de la turbulence de la couche limite dans les vallées entre les saillies, caractérisée en ce que lesdites saillies augmentent de hauteur avec un taux compris entre 20% et 100% par mètre linéaire de distance le long de la surface de paroi dans la direction de l'écoulement fluide.

2. Surface selon la revendication 1, dans laquelle lesdites saillies ont un pas qui augmente avec la distance le long de la surface de paroi dans la direction de l'écoulement fluide.

3. Surface selon la revendication 1 ou la revendication 2, dans laquelle ladite augmentation de hauteur et/ou de pas est continue sur au moins une partie de la hauteur des saillies.

4. Surface selon la revendication 1 ou la revendication 2, dans laquelle les saillies ont au moins une augmentation étagée de hauteur et/ou de pas.

5. Surface selon l'une quelconque des revendications précédentes, dans laquelle la hauteur des saillies augmente avec un taux qui n'est pas sensiblement inférieur à 50% par mètre linéaire.

6. Surface selon l'une quelconque des revendications précédentes, dans laquelle les saillies forment un réseau transversal sensiblement continu.

7. Surface selon l'une quelconque des revendications précédentes, dans laquelle les saillies s'étendent dans la direction du courant, au moins sur la longueur de la région de couche limite turbulente de la surface de paroi.

8. Surface selon l'une quelconque des revendications précédentes, dans laquelle les saillies ont des sommets pointus.

9. Surface selon la revendication 8, dans laquelle les saillies à sommets pointus ont un profil en forme de V.

10. Surface selon la revendication 8, dans laquelle les saillies à sommets pointus ont un profil qui comporte des vallées incurvées en forme concave ou à fond plat entre les sommets.

11. Surface selon l'une quelconque des revendications précédentes, dans laquelle les saillies ont des faces latérales qui sont inclinées selon un angle qui varie sur la hauteur des saillies, chacune desdites faces latérales ayant une région intermédiaire de pente inférieure aux pentes des régions adjacentes au-dessus et au-dessous de ladite région intermédiaire, et formant la partie inférieure d'un sommet à profil concave de la saillie associée.

12. Surface selon l'une quelconque des revendications précédentes, dans laquelle il y a un motif répétitif transversal des saillies, qui comportent au moins deux hauteurs différentes à des emplacements correspondant à la direction de l'écoulement fluide.

13. Surface selon l'une quelconque des revendications précédentes, dans laquelle les saillies s'étendent à l'aval d'au moins un dispositif de rupture des grands tourbillons.

14. Corps ayant une surface de paroi aérodynamique ou hydrodynamique dotée d'une série de saillies selon l'une quelconque des revendications précédentes.

**Revendications pour l'Etat contractant suivant : SE**

1. Surface de paroi aérodynamique ou hydrodynamique, dotée d'une série de saillies allongées qui s'étendent dans la direction l'écoulement fluide par rapport à la surface, et ayant pour effet de réduire la traînée de la couche limite turbulente sur ladite surface en empêchant la pénétration de la turbulence de la couche limite dans les vallées entre les saillies, caractérisée en ce que lesdites saillies augmentent de hauteur avec la distance le long de la surface de paroi dans la direction de l'écoulement fluide.

**2.** Surface selon la revendication 1, dans laquelle lesdites saillies ont un pas qui augmente avec la distance le long de la surface de paroi dans la direction de l'écoulement fluide.

**3.** Surface selon la revendication 1 ou la revendication 2, dans laquelle ladite augmentation de hauteur et/ou de pas est continue sur au moins une partie de la hauteur des saillies.

**4.** Surface selon la revendication 1 ou la revendication 2, dans laquelle les saillies ont au moins une augmentation étagée de hauteur et/ou de pas.

**5.** Surface selon l'une quelconque des revendications précédentes, dans laquelle la hauteur des saillies augmente avec un taux compris entre 20% et 100% par mètre linéaire.

**6.** Surface selon l'une quelconque des revendications précédentes, dans l'laquelle la hauteur des saillies augmente avec un taux qui n'est pas sensiblement inférieur à 50% par mètre linéaire.

**7.** Surface selon l'une quelconque des revendications précédentes, dans laquelle les saillies forment un réseau transversal sensiblement continu.

**8.** Surface selon l'une quelconque des revendications précédentes, dans laquelle les saillies s'étendent dans la direction du courant, au moins, sur la longueur de la région de couche limite turbulente de la surface de paroi.

**9.** Surface selon l'une quelconque des revendications précédentes, dans laquelle les saillies ont des sommets pointus.

**10.** Surface selon la revendication 9, dans laquelle les saillies à sommets pointus ont un profil en forme de V.

**11.** Surface selon la revendication 9, dans laquelle les saillies à sommets pointus ont un profil qui comporte des vallées incurvées en forme concave ou à fond plat entre les sommets.

**12.** Surface selon l'une quelconque des revendications précédentes, dans laquelle les saillies ont des faces latérales qui sont inclinées selon un angle qui varie sur la hauteur des saillies, chacune desdites faces latérales ayant une région intermédiaire de pente inférieure aux pentes des régions adjacentes au-dessus et au-dessous de ladite région intermédiaire, et formant la partie inférieure d'un sommet à profil concave de la saillie associée.

**13.** Surface selon l'une quelconque des revendications précédentes, dans laquelle il y a un motif répétitif transversal des saillies, qui comportent au moins deux hauteurs différentes à des emplacements correspondant à la direction de l'écoulement fluide.

**14.** Surface selon l'une quelconque des revendications précédentes, dans laquelle les saillies s'étendent à l'aval d'au moins un dispositif de rupture des grands tourbillons.

**15.** Corps ayant une surface de paroi aérodynamique ou hydrodynamique dotée d'une série de saillies selon l'une quelconque des revendications précédentes.

**Patentansprüche**

**Patentansprüche für folgende Vertragsstaaten : DE, FR, GB**

**1.** Aerodynamische oder hydrodynamische Wandoberfläche, die mit einer Reihe langgestreckter Vorsprünge versehen ist, die sich in Richtung der relativ zur Oberfläche fließenden Strömung erstrecken und eine Verminderung des Widerstandes einer turbulenten Grenzschicht auf der Oberfläche bewirken, indem das Eindringen von Turbulenzen in die Grenzschicht in den Vertiefungen zwischen den Vorsprüngen verhindert wird, dadurch gekennzeichnet, daß sich die Höhe der Vorsprünge zwischen 20% und 100% pro Meter Länge der Entfernung längs der Wandoberfläche in Richtung der Strömung vergrößert.

EP 0 246 916 B1

**2.** Oberfläche gemäß Anspruch 1, bei welcher sich die Abstände zwischen den Vorsprüngen mit der Entfernung längs der Wandoberfläche in Richtung der Strömung vergrößern.

**3.** Oberfläche nach Anspruch 1 oder Anspruch 2, bei welcher sich die Höhe und/oder die Abstände der Vorsprünge kontinuierlich über wenigstens einen Teil der Länge vergrößern.

**4.** Oberfläche nach Anspruch 1 oder Anspruch 2, bei welcher sich die Höhen und/oder die Abstände der Vorsprünge in wenigstens einer Stufe vergrößern.

**5.** Oberfläche nach einem der vorhergehenden Ansprüche, bei welcher die Höhe der Vorsprünge mit einer Rate zunimmt, die nicht wesentlich kleiner ist als 50% pro Meter Länge.

**6.** Oberfläche nach einem der vorhergehenden Ansprüche, bei welcher die Vorsprünge eine im wesentlichen kontinuierliche, in Spannrichtung verlaufende Anordnung bilden.

**7.** Oberfläche nach einem der vorhergehenden Ansprüche, bei welcher die Vorsprünge sich in Strömungsrichtung wenigstens über die Länge des turbulenten Grenzschichtsbereichs der Wandoberfläche erstrecken.

**8.** Oberfläche nach einem der vorhergehenden Ansprüche, bei welcher die Vorsprünge scharfkantig ausgebildet sind.

**9.** Oberfläche nach Anspruch 8, bei welcher die scharfkantigen Vorsprünge ein V-Profil aufweisen.

**10.** Oberfläche gemäß Anspruch 8, bei welcher die scharfkantigen Vorsprünge ein Profil aufweisen, welches konkav gekrümmt ist oder Vertiefungen mit flachem Boden zwischen den Vorsprüngen aufweist.

**11.** Oberfläche nach einem der vorhergehenden Ansprüche, bei welcher die Vorsprünge Seitenflächen aufweisen, die unter einem Winkel angestellt sind, der sich über die Höhe der Vorsprünge ändert, wobei jede Seitenfläche einen Zwischenbereich geringerer Steilheit als die benachbarten Bereiche über und unter dem Zwischenbereich aufweist, wodurch der untere Teil eines konkaven Profils des zugeordneten Vorsprungs gebildet wird.

**12.** Oberfläche nach einem der vorhergehenden Ansprüche, bei welcher ein sich in Spannrichtung wiederholendes Muster von Vorsprüngen vorgesehen ist, die wenigstens zwei unterschiedliche Höhen an entsprechenden Stellen in Richtung der Strömung aufweisen.

**13.** Oberfläche nach einem der vorhergehenden Ansprüche, bei welcher die Vorsprünge sich stromab wenigstens einer großen Turbulenz-Aufbrechvorrichtung erstrecken.

**14.** Körper mit einer aerodynamischen oder hydrodynamischen Wandoberfläche, die mit einer Reihe von Vorsprüngen gemäß einem der vorhergehenden Ansprüche versehen ist.

**Patentansprüche für folgenden Vertragsstaat : SE**

**1.** Aerodynamische oder hydrodynamische Wandoberfläche, die mit einer Reihe langgestreckter Vorsprünge versehen ist, die sich in Richtung der relativ zur Oberfläche fließenden Strömung erstrecken und eine Verminderung das Widerstandes einer turbulenten Grenzschicht auf der Oberfläche bewirken, indem das Eindringen von Turbulenzen in die Grenzschicht in den Vertiefungen zwischen den Vorsprüngen verhindert wird, dadurch gekennzeichnet, daß sich die Höhe der Vorsprünge mit der Entfernung längs der Wandoberfläche in Richtung der Strömung vergrößert.

**2.** Oberfläche gemäß Anspruch 1, bei welcher sich die Abstände zwischen den Vorsprüngen mit der Entfernung längs der Wandoberfläche in Richtung der Strömung vergrößern.

**3.** Oberfläche nach Anspruch 1 oder Anspruch 2, bei welcher sich die Höhe und/oder die Abstände der Vorsprünge kontinuierlich über wenigstens einen Teil der Länge vergrößern.

14

**4.** Oberfläche nach Anspruch 1 oder Anspruch 2, bei welcher sich die Höhen und/oder die Abstände der Vorsprünge in wenigstens einer Stufe vergrößern.

**5.** Oberfläche nach einem der vorhergehenden Ansprüche, bei welcher die Höhe der Vorsprünge mit einer Rate zwischen 20% und 100% pro Meter Länge zunimmt.

**6.** Oberfläche nach Anspruch 5, bei welcher die Höhe der Vorsprünge mit einer Rate zunimmt, die nicht wesentlich kleiner ist als 50% pro Meter Länge.

**7.** Oberfläche nach einem der vorhergehenden Ansprüche, bei welcher die Vorsprünge eine im wesentlichen kontinuierliche, in Spannrichtung verlaufende Anordnung bilden.

**8.** Oberfläche nach einem der vorhergehenden Ansprüche, bei welcher die Vorsprünge sich in Strömungsrichtung wenigstens über die Länge des turbulenten Grenzschichtsbereichs der Wandoberfläche erstrecken.

**9.** Oberfläche nach einem der vorhergehenden Ansprüche, bei welcher die Vorsprünge scharfkantig ausgebildet sind.

**10.** Oberfläche nach Anspruch 9, bei welcher die scharfkantigen Vorsprünge ein V-Profil aufweisen.

**11.** Oberfläche gemäß Anspruch 9, bei welcher die scharfkantigen Vorsprünge ein Profil aufweisen, welches konkav gekrümmt ist oder Vertiefungen mit flachem Boden zwischen den Vorsprüngen aufweist.

**12.** Oberfläche nach einem der vorhergehenden Ansprüche, bei welcher die Vorsprünge Seitenflächen aufweisen, die unter einem Winkel angestellt sind, der sich über die Höhe der Vorsprünge ändert, wobei jede Seitenfläche einen Zwischenbereich geringerer Steilheit als die benachbarten Bereiche über und unter dem Zwischenbereich aufweist, wodurch der untere Teil eines konkaven Profils des zugeordneten Vorsprungs gebildet wird.

**13.** Oberfläche nach einem der vorhergehenden Ansprüche, bei welcher ein sich in Spannrichtung wiederholendes Muster von Vorsprüngen vorgesehen ist, die wenigstens zwei unterschiedliche Höhen an entsprechenden Stellen in Richtung der Strömung aufweisen.

**14.** Oberfläche nach einem der vorhergehenden Ansprüche, bei welcher die Vorsprünge sich stromab wenigstens einer großen Turbulenz-Aufbrechvorrichtung erstrecken.

**15.** Körper mit einer aerodynamischen oder hydrodynamischen Wandoberfläche, die mit einer Reihe von Vorsprüngen gemäß einem der vorhergehenden Ansprüche versehen ist.

FLOW →

$h$  $r$  $s$

FIG.1

FIG.2

$r$  $t$  VIRTUAL SURFACE  $h$  $\frac{3}{4}h$  REAL SURFACE

FIG.3

$r$  $r_1$

FIG.4

FIG.5